# EUROPÄISCHE PATENTSCHRIFT

(11) **EP 3 812 483 B1**
(45) Veröffentlichungstag und Bekanntmachung des Hinweises auf die Patenterteilung: **31.01.2024**
(21) Anmeldenummer: 19205192.8
(22) Anmeldetag: 24.10.2019
(51) Int. Cl.: C25B 9/70

(54) **ELEKTROLYSEVORRICHTUNG ZUR ELEKTROLYTISCHEN PRODUKTION VON SAUERSTOFF AUS OXIDHALTIGEM AUSGANGSMATERIAL**
ELECTROLYSIS DEVICE FOR ELECTROLYTIC PRODUCTION OF OXYGEN FROM OXIDE-CONTAINING STARTING MATERIAL
DISPOSITIF D'ÉLECTROLYSE DESTINÉ À LA PRODUCTION ÉLECTROLYTIQUE D'OXYGÈNE À PARTIR DU MATÉRIAU DE DÉPART CONTENANT DE L'OXYGÈNE

(43) Veröffentlichungstag der Anmeldung: 28.04.2021
(73) Patentinhaber: Airbus Defence and Space GmbH, 82024 Taufkirchen (DE)
(72) Erfinder: Häming, Marc, 88048 Friedrichshafen (DE); Seidel, Achim, 88690 Uhldingen-Mühlhofen (DE); Zell, Uwe, 88682 Salem (DE)
(74) Vertreter: Daub, Thomas

(56) Entgegenhaltungen:
- DE-A1- 10 156 349
- JP-A- 2009 138 254
- US-B1- 8 066 861
- MARTIN A ET AL: "Yttria-stabilized zirconia as membrane material for electrolytic deoxidation of CaO-CaCl2 melts", JOURNAL OF APPLIED ELECTROCHEMISTRY, KLUWER ACADEMIC PUBLISHERS, DO, Bd. 40, Nr. 3, 11. Oktober 2009 (2009-10-11), Seiten 533-542, XP019790158, ISSN: 1572-8838
- W. BAUKAL: "Entwicklungsrichtungen in der Anwendung sauerstoffionen-leitender Festelektrolyte", CHEMIE INGENIEUR TECHNIK., Bd. 41, Nr. 14, 1. Juli 1969 (1969-07-01), Seiten 791-798, XP055684532, WEINHEIM; DE ISSN: 0009-286X, DOI: 10.1002/cite.330411402

## Beschreibung

### Stand der Technik

Die Erfindung betrifft eine Elektrolysevorrichtung zur elektrolytischen Produktion von Sauerstoff aus oxidhaltigem Ausgangsmaterial.

Es ist bereits eine Elektrolysevorrichtung mit zumindest einer Kathode, welche zumindest teilweise einen Aufnahmebereich begrenzt, welcher in zumindest einem Betriebszustand zu einer Aufnahme des oxidhaltigen Ausgangsmaterials vorgesehen ist, und mit zumindest einer Anode vorgeschlagen worden.

Ferner sind aus GB 2 534 332 A, EP 3 161 189 B1 und EP 2 935 656 B1 insbesondere Vorrichtungen zur Produktion von Metallen und Übergangsmetallen durch direkte Reduktion von festen oder pulverförmigen oxidhaltigen Ausgangsmaterialien bekannt. Etablierte elektrolytische Vorrichtungen und elektrolytische Verfahren, wie der FFC-Prozess, zielen dabei insbesondere auf die chemische Reduktion von Metalloxiden und Übergangsmetalloxiden zur Herstellung von reinem Metall ab, insbesondere zur Produktion von Titan und Tantal aus Titanoxid bzw. Tantaloxid. Das Ausgangsmaterial befindet sich dabei insbesondere in elektrischem Kontakt mit einer Kathode, wobei als Elektrolyt typischerweise CaCl₂, LiCl und/oder ein Gemisch aus CaCl₂ mit einer Beimischung von CaO (< 10%) verwendet wird. Die Anode besteht typischerweise aus Graphit oder flüssigem Aluminium und ist ein Verschleißteil. Bei einer Arbeitstemperatur von typischerweise 800°C bis 1000°C wird eine Gleichspannung zwischen Kathode und Anode angelegt. Durch die elektrochemischen Prozesse wird das Ausgangsmaterial reduziert, und die Anode wird oxidiert und in CO₂ bzw. Aluminiumoxid umgewandelt, was dann als ungenutztes Abfallprodukt anfällt.

Zur industriellen Produktion von Metallen werden insbesondere Vorrichtungen und Verfahren genutzt, bei denen mehrere bipolare elektrochemische Zellen in einem Elektrolytbad hintereinandergeschaltet werden. Aus den Druckschriften EP 2 430 216 B1, EP 2 640 871 B1, EP 2 764 137 B1 und EP 2 640 872 B1 sind kontinuierliche Verfahren bekannt, bei denen das Elektrolytbad bzw. die Vorrichtung typischerweise an zwei Stellen zu seiner/ihrer Umgebung offen zum Einbringen und zur Entnahme von frisch beladenen Zellen oder Zell-Stacks vorgesehen ist. Darüber hinaus ist aus der WO2017/203245A1 eine integrierte Lösung bekannt, bestehend aus Vorrichtungen und Verfahren für die elektrolytische Herstellung von Metallpulvern und der direkten Weiterverarbeitung mittels additiver Fertigungsverfahren. Die Druckschrift "Martin A et al. "Yttria-stabilized zirconia as membrane material for electrolytic deoxidation of CaO-CaCl2 melts", Journal of applied Electrochemistry, Bd. 40, Nr. 3 2009" offenbart eine für die Produktion von Sauerstoff geeignete Elektrolysevorrichtung, die eine Kathode und eine in eine Sauerstoffpumpe integrierte Anode aufweist, und die einen Aufnahmebereich, ein Reaktorgehäuse, einen Materialbehälter und eine Koppeleinheit umfasst, wobei die Koppeleinheit zu einer lösbaren Verbindung des Materialbehälters mit dem Reaktorgehäuse vorgesehen ist. Die Druckschrift US 8066861 B1 offenbart eine Elektrolysevorrichtung mit einem Aufnahmebereich, mit einer selektiven Sauerstoffpumpe, mit einer Kathode, mit einer in die Sauerstoffpumpe integrierten Anode, mit einem Reaktorgehäuse und mit einem Materialbehälter, wobei die Sauerstoffpumpe einen YSZ-Festelektrolyt aufweist.

Die Aufgabe der Erfindung besteht insbesondere darin, eine gattungsgemäße Elektrolysevorrichtung mit verbesserten Eigenschaften hinsichtlich einer Kompaktheit sowie einer Nutzbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Für Raumfahrtanwendungen und nachhaltige Exploration des Weltraums werden insbesondere Technologien benötigt, die es ermöglichen, vor Ort verfügbare Ressourcen zu nutzen. Von Interesse sind weltraumtaugliche Technologien zur Produktion von Sauerstoff, Wasser und Treibstoff aus Materialen, die auf dem Mond, auf dem Mars oder in und/oder auf Asteroiden vorhanden sind. Von besonderem Interesse sind Technologien zur Produktion von Sauerstoff und/oder Wasser aus oxidhaltigem Mondgestein, insbesondere lunarem Regolith, Marsgestein, insbesondere Mars-Regolith, oder Asteroidengestein. "Weltraumtauglich" bedeutet hier insbesondere bezogen auf eine wiederverwendbare, verschleiß-/wartungsarme Vorrichtung, ein Verfahren ohne den Einsatz von Verbrauchsmaterialien sowie Vorrichtungen mit einer leichten und kompakten Bauweise und/oder einer hohen Energie- und/oder Materialeffizienz.

### Vorteile der Erfindung

Die Erfindung geht aus von einer Elektrolysevorrichtung zur elektrolytischen Produktion von Sauerstoff aus oxidhaltigem Ausgangsmaterial, mit zumindest einer Kathode, welche zumindest teilweise einen Aufnahmebereich begrenzt, welcher in zumindest einem Betriebszustand zu einer Aufnahme des oxidhaltigen Ausgangsmaterials vorgesehen ist, und mit zumindest einer Anode vorgesehen ist.

Es wird vorgeschlagen, dass die Elektrolysevorrichtung zumindest eine, zumindest teilweise einstückig mit der Anode ausgebildete selektive Sauerstoffpumpe aufweist. Vorzugsweise ist die Anode zumindest teilweise von der selektiven Sauerstoffpumpe gebildet. Bevorzugt weisen die Anode und die selektive Sauerstoffpumpe zumindest eine gemeinsame Elektrode auf. Insbesondere weist die selektive Sauerstoffpumpe zumindest eine Elektrode auf, welche zumindest zusätzlich als die Anode dient. Besonders bevorzugt kombiniert die selektive Sauerstoffpumpe die Funktion einer Pumpe und der Anode. Grundsätzlich wäre auch denkbar, dass die Anode von mehreren Elektroden gebildet ist, wobei insbesondere zumindest eine der Elektroden zu einer Erreichung einer Pumpfunktion der selektiven Sauerstoffpumpe wirkt.

Unter einer "Elektrolysevorrichtung" soll in diesem Zusammenhang insbesondere eine Vorrichtung verstanden werden, welche in zumindest einem Betriebszustand zu einer Durchführung einer Elektrolyse vorgesehen ist. Vorzugsweise ist die Elektrolysevorrichtung zu einer insbesondere wiederkehrenden elektrolytischen Produktion von Sauerstoff aus oxidhaltigem Ausgangsmaterial vorgesehen. Bevorzugt weist die Elektrolysevorrichtung zumindest eine Elektrolysezelle auf. Unter einer "Elektrolysezelle" soll in diesem Zusammenhang insbesondere eine Einheit mit zumindest zwei Elektroden verstanden werden, wovon vorzugsweise eine als eine Kathode und eine als eine Anode ausgebildet ist, und mit einem die zwei Elektroden verbindenden Stromkreis. Vorzugsweise sind/ist zwischen den zumindest zwei Elektroden in zumindest einem Betriebszustand ein Elektrolyt und/oder zumindest eine zwischen den zwei Elektroden angeordnete elektrolytgefüllte oder ionenleitende Membran angeordnet. Vorzugsweise ist die Elektrolysezelle zu einer Durchführung einer Redox-Reaktion vorgesehen. Unter einem "Elektrolyten" soll insbesondere ein ionenleitender Stoff, vorzugsweise in Form einer Lösung, beispielsweise einer alkalischen Lösung, verstanden werden. Vorzugsweise ist der Elektrolyt auf Basis ionischer Flüssigkeiten. Ferner sind verschiedene, einem Fachmann als sinnvoll erscheinende Elektrolyten denkbar, wie insbesondere Calciumchlorid, Lithiumchlorid, Natriumchlorid, Magnesiumchlorid in Reinform oder mit Zusätzen von CaO, Li₂O, Na₂O, MgO, jeweils mit einem Anteil, jeweils insbesondere kleiner 1 0%.

Ferner soll in diesem Zusammenhang unter einer "selektiven Sauerstoffpumpe" insbesondere eine, bevorzugt für Sauerstoff, selektive Pumpeneinheit verstanden werden. Vorzugsweise soll darunter insbesondere eine Pumpeneinheit verstanden werden, mittels deren selektiv Sauerstoff gepumpt werden kann. Bevorzugt soll darunter insbesondere eine Pumpeneinheit verstanden werden, mittels deren aus einem Raum unabhängig von einem vorherrschenden Gasgemisch - falls vorhanden - selektiv Sauerstoff abgepumpt und/oder in einen anderen Raum transferiert werden kann. Vorzugsweise weist die selektive Sauerstoffpumpe zumindest eine für Sauerstoffionen durchlässige Barriere, insbesondere eine Membran und/oder besonders bevorzugt einen Feststoffelektrolyten, auf. Vorzugsweise weist der Feststoffelektrolyt definierte Leerstellen auf, über welche die Sauerstoffionen den Feststoffelektrolyten passieren können. Eine entsprechende selektive Sauerstoffpumpe ist insbesondere aus der EP 3 216 853 A1 bekannt. Die in der Druckschrift EP 3 216 853 A1 beschriebene selektive Sauerstoffpumpe soll daher insbesondere als Teil der Offenbarung der vorliegenden Erfindung angesehen werden. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Elektrolysevorrichtung kann insbesondere ein vorteilhaft kompakter Aufbau erreicht werden. Es kann insbesondere eine Anzahl von Bauteilen gering gehalten werden. Ferner kann direkt ein Abpumpen des erzeugten Sauerstoffs an der Anode erreicht werden. Die Elektrolysevorrichtung ermöglicht insbesondere die direkte elektrolytische Produktion und Nutzbarmachung von Sauerstoff aus oxidhaltigem Ausgangsmaterial. Es kann ferner insbesondere eine kompakte Bauweise durch die Integration einer Sauerstoffpumpe in der Anode erreicht werden. Ferner kann insbesondere erreicht werden, dass keine oder lediglich eine minimierte Degradation der Anode während des Prozesses erfolgt.

Ferner wird vorgeschlagen, dass die zumindest eine selektive Sauerstoffpumpe zumindest eine Innenelektrode aufweist, welche die Anode ausbildet. Vorzugsweise bildet die Innenelektrode sowohl eine Elektrode der selektiven Sauerstoffpumpe als auch die Elektrode der Anode aus. Insbesondere bildet die Innenelektrode sowohl einen Teil der Anode als auch einen Teil der selektiven Sauerstoffpumpe. Bevorzugt ist die Anode vollständig von der Innenelektrode gebildet. Die Innenelektrode ist insbesondere auf einer dem Aufnahmebereich abgewandten Seite der Sauerstoffpumpe angeordnet. Insbesondere weist die selektive Sauerstoffpumpe zumindest teilweise eine hohlzylindrische Grundform auf, wobei die Innenelektrode insbesondere innenliegend ausgebildet ist. Grundsätzlich wäre denkbar, dass die selektive Sauerstoffpumpe zusätzlich zu der Innenelektrode eine weitere Elektrode, wie insbesondere eine Außenelektrode, aufweist. Es wäre jedoch auch denkbar, dass auf eine Außenelektrode verzichtet werden kann. Bei einer Ausführung ohne eine Außenelektrode wird eine Pumpspannung, insbesondere eine Gleichspannung, insbesondere direkt zwischen der zumindest einen Innenelektrode und der zumindest einen Kathode der Elektrolysevorrichtung angelegt. Für den Betrieb einer Ausführung mit einer zusätzlichen Außenelektrode wird insbesondere zusätzlich eine Pumpspannung, insbesondere eine Gleichspannung, zwischen der zumindest einen Innenelektrode und der Außenelektrode angelegt, die kleiner ist als die Spannung zwischen der Innenelektrode und der Kathode.

Dadurch kann insbesondere eine Anzahl von Bauteilen gering gehalten werden. Ferner kann direkt ein Abpumpen des erzeugten Sauerstoffs an der Anode erreicht werden.

Des Weiteren wird vorgeschlagen, dass die zumindest eine selektive Sauerstoffpumpe zumindest einen Feststoffelektrolyten, insbesondere ein Zirkoniumoxidelement, aufweist, der zu einem selektiven Transfer von Sauerstoff aus dem Aufnahmebereich in einen Pumpraum vorgesehen ist. Vorzugsweise ist der Feststoffelektrolyt zu einem selektiven Transfer von Sauerstoffionen, insbesondere von Sauerstoffanionen, aus dem Aufnahmebereich in einen Pumpraum vorgesehen. Vorzugsweise ist der Feststoffelektrolyt von einer Zirkoniumoxidkeramik gebildet. Besonders bevorzugt wird ferner eine Pumprate der selektiven Sauerstoffpumpe insbesondere durch eine angelegte Stromstärke und/oder eine Geometrie, insbesondere eine Oberfläche, des Feststoffelektrolyten beeinflusst. Vorzugsweise können die Pumpleistung, also ein Volumenstrom pro Zeiteinheit, und die erreichbaren Drücke, insbesondere sowohl auf einer Saug- als auch auf einer Abgabeseite, durch einen Pumpstrom, durch eine Betriebstemperatur und durch die geometrischen Abmessungen der selektiven Sauerstoffpumpe eingestellt und/oder konfiguriert werden. Unter einer "Zirkoniumoxidkeramik" soll in diesem Zusammenhang insbesondere eine technische Keramik verstanden werden. Vorzugsweise ist die Zirkoniumoxidkeramik insbesondere von einem nichtmetallischen mineralischen Werkstoff gebildet. Die Zirkoniumoxidkeramik wird insbesondere mit anderen Oxiden, wie beispielsweise Calciumoxid (CaO), Magnesiumoxid (MgO) und/oder Yttriumoxid (Y₂O₃), stabilisiert. Grundsätzlich sind jedoch auch andere, einem Fachmann als sinnvoll erscheinende Keramiken und/oder Elemente denkbar, wie beispielsweise eine Keramik und/oder ein Element, welche/welches Titanoxid, Vanadiumoxid, Nioboxid und/oder Perowskit aufweist, wobei die Oxide jeweils wiederum durch andere Oxide stabilisiert sein können. Dadurch kann insbesondere eine besonders zuverlässige selektive Sauerstoffpumpe bereitgestellt werden. Ferner kann dadurch eine vorteilhaft flexible Pumprate der selektiven Sauerstoffpumpe ermöglicht werden. Ferner kann dadurch ein geringer Ressourcenbedarf erreicht werden. Es kann eine operationell sehr robuste, und somit für den Einsatz im Weltraum bevorzugte, Elektrolysevorrichtung bereitgestellt werden. Insbesondere kann eine selektive Sauerstoffpumpe frei von beweglichen Teilen bereitgestellt werden. Vorzugsweise kann eine, insbesondere vollkommen, elektrisch arbeitende Elektrolysevorrichtung bereitgestellt werden.

Es wird ferner vorgeschlagen, dass die zumindest eine Innenelektrode direkt auf einer Innenseite des Feststoffelektrolyten angeordnet ist. Der Feststoffelektrolyt weist insbesondere eine zumindest annähernd hohlzylindrische Form auf, wobei die Innenelektrode auf einer Innenfläche des Feststoffelektrolyten angeordnet ist. Die zumindest eine Innenelektrode ist insbesondere auf einer dem Pumpraum zugewandten Innenseite des Feststoffelektrolyten angeordnet. Die Innenelektrode erstreckt sich insbesondere über einen Großteil einer Innenseite des Feststoffelektrolyten. Die Innenelektrode ist vorzugsweise zwischen dem Feststoffelektrolyten und dem Pumpraum angeordnet. Die Innenelektrode ist insbesondere von einer strukturierten Elektrode mit Freistellen zwischen dem Elektrodenmaterial gebildet. Insbesondere ist der Feststoffelektrolyt von einem Zirkoniumoxidröhrchen gebildet, welches an einer Seite geschlossen ist. Vorzugsweise ist der Feststoffelektrolyt "reagenzglasförmig" ausgebildet. Dadurch kann insbesondere eine vorteilhaft kompakte Anordnung erreicht werden. Ferner kann insbesondere eine Anzahl von separaten Bauteilen gering gehalten werden.

Erfindungsgemäß weist die Elektrolysevorrichtung ein Reaktorgehäuse und zumindest einen, in zumindest einem Betriebszustand in dem Reaktorgehäuse angeordneten Materialbehälter, der in zumindest einem Betriebszustand zu einer Aufnahme des oxidhaltigen Ausgangsmaterials vorgesehen ist, auf. Vorzugsweise ist der Materialbehälter zumindest teilweise, insbesondere bereichsweise, durchlässig ausgebildet. Insbesondere ist der Materialbehälter zumindest bereichsweise durchlässig für einen Elektrolyten, insbesondere einen flüssigen Elektrolyten, ausgebildet. Bevorzugt kann ein Elektrolyt zu einer Benetzung des oxidhaltigen Ausgangsmaterials durch den Materialbehälter in den Aufnahmebereich des Materialbehälters gelangen. Vorzugsweise begrenzt der Materialbehälter den Aufnahmebereich zu einer Aufnahme des oxidhaltigen Ausgangsmaterials. Bevorzugt ist der Materialbehälter in zumindest einem Betriebszustand, insbesondere zumindest während eines Elektrolysevorgangs, in dem Reaktorgehäuse aufgenommen. Vorzugsweise ist der Materialbehälter herausnehmbar in das Reaktorgehäuse eingesetzt ausgebildet. Insbesondere kann der Materialbehälter vollständig aus dem Reaktorgehäuse entfernt werden. Das Reaktorgehäuse besteht vorzugsweise aus einem chemisch beständigen Material, wie insbesondere aus einem Edelmetall oder einer Keramik. Bevorzugte Materialien sind insbesondere Edelstahl, Platin, Tantal, mit Gold beschichtetes Metall oder Aluminiumoxid, Zirkonoxid, Magnesiumoxid, Alumina-Zirkonia, Yttrium-stabilisierter Zirkonia, Aluminiumtitanat, Mullit.

Dadurch kann insbesondere ein vorteilhafter Aufbau erreicht werden. Es kann insbesondere eine vorteilhaft kompakte Anordnung erreicht werden.

Zudem wird vorgeschlagen, dass der zumindest eine Materialbehälter zumindest eine Außenwand aufweist, welche zumindest teilweise von der Kathode gebildet ist. Vorzugsweise ist der Materialbehälter von einem zumindest annähernd zylindrischen Behälter gebildet. Bevorzugt ist eine umlaufende Seitenwand des Materialbehälters zumindest bereichsweise von der Kathode gebildet. Vorzugsweise ist die umlaufende Seitenwand des Materialbehälters vollständig von der Kathode gebildet. Dadurch kann insbesondere eine vorteilhaft kompakte Anordnung erreicht werden. Ferner kann insbesondere eine Anzahl von separaten Bauteilen gering gehalten werden. Insbesondere kann dadurch eine vorteilhafte Integration der Katode erreicht werden.

Erfindungsgemäß weist der zumindest eine Materialbehälter zumindest eine Bodenplatte auf, die zumindest ein elektrisch isolierendes Ausrichtungselement zu einer Ausrichtung der zumindest einen selektive Sauerstoffpumpe relativ zu der Kathode aufweist. Vorzugsweise ist das Ausrichtungselement dazu vorgesehen, die selektive Sauerstoffpumpe relativ zu der Kathode zu zentrieren. Bevorzugt ist das Ausrichtungselement dazu vorgesehen, zumindest ein Ende der selektiven Sauerstoffpumpe aufzunehmen und in zumindest einer Ebene auszurichten. Vorzugsweise weist das Ausrichtungselement eine Ausnehmung auf, welche zu einer Aufnahme zumindest eines Endes der selektiven Sauerstoffpumpe vorgesehen ist. Ferner wäre denkbar, dass die gesamte Bodenplatte aus einem elektrisch isolierenden Material gebildet ist. Insbesondere ist das elektrisch isolierende Ausrichtungselement dazu vorgesehen, die selektive Sauerstoffpumpe gegenüber der Kathode elektrisch zu isolieren. Dadurch kann insbesondere vorteilhaft eine definierte Ausrichtung zwischen der Sauerstoffpumpe und der Kathode erreicht werden.

Des Weiteren wird vorgeschlagen, dass die Elektrolysevorrichtung zumindest eine Koppeleinheit aufweist, welche zu einer lösbaren Verbindung des Materialbehälters mit dem Reaktorgehäuse vorgesehen ist. Vorzugsweise weist die Koppeleinheit zumindest ein erstes Koppelelement, welches zumindest teilweise fest mit dem Reaktorgehäuse verbunden ist, und zumindest ein zweites Koppelelement, welches fest mit dem Materialbehälter verbunden ist, auf. Insbesondere ist das erste Koppelelement zumindest fest mit einem Deckel des Reaktorgehäuses verbunden. Vorzugsweise wird das Reaktorgehäuse mittels des Deckels während eines Betriebs verschlossen. Vorzugsweise ist der Materialbehälter mittels der Koppeleinheit, insbesondere zu einer Befüllung mit dem oxidhaltigen Ausgangsmaterial, vollständig aus dem Reaktorgehäuse entfernbar und von dem Reaktorgehäuse trennbar. Unter einer "Koppeleinheit" soll in diesem Zusammenhang insbesondere eine Einheit verstanden werden, welche zu einer verschließenden, insbesondere lösbaren, Verbindung von zumindest zwei Bauteilen vorgesehen ist, wobei zumindest eines der Bauteile von einem Behälter gebildet ist. Eine Verbindung kann dabei insbesondere mittels einer Steckverbindung, einer Drehverbindung, einer Bajonettverbindung und/oder einer anderen, einem Fachmann als sinnvoll erscheinenden Verbindung erfolgen. Vorzugsweise ist die Koppeleinheit zumindest teilweise von einem Bajonettverschluss und/oder einem Schlüssellochverbinder gebildet. Dadurch können insbesondere eine vorteilhafte Trennung und Verbindung der Elektrolysevorrichtung erreicht werden. Des Weiteren kann bei einem Austausch des Ausgangsmaterials eine einfache Trennung des Ausgangsmaterials vom Elektrolyt bei hoher Elektrolytrückgewinnung erreicht werden. Es kann insbesondere auf einen Waschvorgang verzichtet werden. Ferner kann insbesondere ein verminderter Elektrolytverlust durch ein geschlossenes Reaktorgehäuse erreicht werden. Es erfolgt insbesondere kein Austritt von Elektrolytdampf aus dem Reaktorgehäuse. Hierdurch kann ferner ein energieeffizienter Betrieb durch einen kompakten Aufbau der Vorrichtung und optional aufgrund einer Absenkung der Arbeitstemperatur des Reaktors durch den Einsatz eines Elektrolyten auf Basis von ionischen Flüssigkeiten erreicht werden.

Erfindungsgemäß weist die Elektrolysevorrichtung ein Reaktorgehäuse auf, welches zumindest einen Reaktorraum und zumindest ein mit dem Reaktorraum verbundenes Elektrolytreservoir aufweist, welches zu einer Aufnahme eines Elektrolyten vorgesehen ist. Vorzugsweise grenzt das Elektrolytreservoir an den Reaktorraum an und/oder ist über eine Verbindungsleitung mit dem Reaktorraum verbunden. Bevorzugt ist der Elektrolyt von einem flüssigen Elektrolyten gebildet. Dadurch kann insbesondere eine vorteilhaft kompakte Anordnung erreicht werden. Ferner kann insbesondere eine Anzahl von separaten Bauteilen gering gehalten werden. Insbesondere kann dadurch eine vorteilhafte Integration des Elektrolytreservoirs erreicht werden.

Es wird weiter vorgeschlagen, dass die Elektrolysevorrichtung zumindest einen Elektrolytverdränger aufweist, welcher dazu vorgesehen ist, in zumindest einem Betriebszustand zumindest einen Teil des Elektrolyten aus dem Elektrolytreservoir in den Reaktorraum zu verdrängen. Vorzugsweise ist der Elektrolytverdränger von einem Verdrängerkolben gebildet, welcher in das Elektrolytreservoir hinein oder aus dem Elektrolytreservoir heraus bewegt werden kann. Insbesondere kann abhängig von einer Position des Elektrolytverdrängers eine Verdrängung des Elektrolyten gesteuert werden. Vorzugsweise ist der Elektrolytverdränger elektrisch, wie beispielsweise mittels eines Spindeltriebs, verstellbar. Bevorzugt ist der Elektrolytverdränger über einen Wellbalg mit dem Reaktorgehäuse verbunden, um eine abgedichtete Bewegung des Elektrolytverdrängers innerhalb des Reaktorgehäuses zu ermöglichen. Dadurch kann insbesondere eine vorteilhaft schnelle und einfache Befüllung des Reaktorraums mit dem Elektrolyten erreicht werden. Es kann insbesondere ein vorteilhaft automatisierter Prozess erreicht werden. Es kann insbesondere eine automatisierte Befüllung des Reaktorraums mit dem Elektrolyten erreicht werden. Hierdurch kann insbesondere eine vorteilhafte Anwendung im Weltraum erreicht werden.

Ferner geht die Erfindung aus von einem Sauerstofferzeugungssystem mit der Elektrolysevorrichtung zur elektrolytischen Produktion von Sauerstoff aus oxidhaltigem Ausgangsmaterial. Es wird vorgeschlagen, dass das Sauerstofferzeugungssystem zumindest eine Anreicherungseinheit zu einer Anreicherung des oxidhaltigen Ausgangsmaterials für die Elektrolysevorrichtung und zumindest eine Sauerstoffverarbeitungseinheit, welche zu einer Umwandlung des mittels der Elektrolysevorrichtung erzeugten Sauerstoffs in Wasser vorgesehen ist, aufweist. Vorzugsweise ist das Sauerstofferzeugungssystem insbesondere zu einer Erzeugung und anschließenden Speicherung und/oder Verwertung von Sauerstoff vorgesehen. Das Sauerstofferzeugungssystem bildet insbesondere ein in sich geschlossenes System aus. Bevorzugt ist das Sauerstofferzeugungssystem insbesondere zu einer selbsttätigen Erzeugung und Speicherung und/oder Verarbeitung von Sauerstoff vorgesehen. Die Anreicherungseinheit ist insbesondere zu einer Selektion und zu einer Anreicherung einer vorteilhaften chemischen Zusammensetzung und Körnung des Ausgangsmaterials und zu einer Bereitstellung der zur Füllung des Aufnahmebereichs benötigten Menge an oxidhaltigem Ausgangsmaterial vorgesehen. Vorzugsweise weist die Anreicherungseinheit zumindest ein Zerkleinerungselement auf, welches zu einer Aufbereitung des oxidhaltigen Ausgangsmaterials vorgesehen ist. Die Sauerstoffverarbeitungseinheit ist insbesondere zu einer Erzeugung von Wasser aus Sauerstoffgas vorgesehen. Dadurch kann insbesondere ein vorteilhaftes System zur Herstellung von Sauerstoff bereitgestellt werden. Das Sauerstofferzeugungssystem ermöglicht insbesondere die direkte elektrolytische Produktion und Nutzbarmachung von Sauerstoff aus oxidhaltigem Ausgangsmaterial.

Es wird weiter vorgeschlagen, dass die Sauerstoffverarbeitungseinheit zumindest eine Brennstoffzelle aufweist, welche dazu vorgesehen ist, die chemische Reaktionsenergie aus der Wassererzeugung in elektrische Energie umzuwandeln. Die Sauerstoffverarbeitungseinheit ist insbesondere neben der Erzeugung von Wasser zu einer Produktion von elektrischer Energie durch eine chemische Reaktion des produzierten Sauerstoffs mit Wasserstoff mittels der Brennstoffzelle vorgesehen. Die erzeugte elektrische Energie kann wiederum insbesondere der Elektrolysevorrichtung zur Durchführung der Elektrolyse zugeführt werden. Das erzeugte Wasser kann insbesondere in einem Wasserbehälter gespeichert werden. Dadurch kann insbesondere ein vorteilhaft automatisiertes Sauerstofferzeugungssystem bereitgestellt werden. Es kann insbesondere ein Energiebedarf, insbesondere der Elektrolysevorrichtung, gering gehalten werden. Ferner kann vorteilhaft Wasser produziert werden. Alternativ wäre auch denkbar, dass eine chemische Reaktion des produzierten Sauerstoffs mit Wasserstoff zu Wasser in einer Brennkammer erfolgt. Die dabei erzeugte Wärme könnte insbesondere der Elektrolysevorrichtung zugeführt werden, während das erzeugte Wasser in einem Wasserbehälter gespeichert wird.

Des Weiteren geht die Erfindung aus von einem Verfahren zum Betrieb der Elektrolysevorrichtung, bei dem in einem Löseschritt das oxidhaltige Ausgangsmaterial zu einem Herauslösen von Sauerstoffionen, insbesondere der Sauerstoffanionen, mit einem Elektrolyten in Kontakt gebracht wird. Es wird vorgeschlagen, dass das Verfahren einen Pumpschritt aufweist, in welchem die herausgelösten Sauerstoffionen mittels der selektiven Sauerstoffpumpe aus dem Aufnahmebereich in einen Pumpraum gepumpt werden. Vorzugsweise werden vor dem Löseschritt das Reaktorgehäuse sowie der Materialbehälter auf eine Arbeitstemperatur aufgeheizt. Die Arbeitstemperatur liegt insbesondere über einer Elektrolyt-Schmelztemperatur, bevorzugt um 20°C bis 200°C über der Elektrolyt-Schmelztemperatur. Die Arbeitstemperatur beträgt besonders bevorzugt zwischen 700°C und 950°C. Ferner wird vor dem Löseschritt insbesondere der Elektolytverdränger nach unten gefahren, das Elektrolytreservoir geleert und der Reaktorraum mit dem Elektrolyten gefüllt. Bevorzugt diffundiert der Elektrolyt in dem Löseschritt durch eine mikrostrukturierte Außenwand in den Materialbehälter hinein. In dem Pumpschritt wird insbesondere eine Gleichspannung zwischen der Kathode und der Anode angelegt. Dadurch kann insbesondere eine vorteilhafte Sauerstofferzeugung erreicht werden. Ferner kann direkt ein Abpumpen des erzeugten Sauerstoffs an der Anode erreicht werden. Es wird insbesondere die direkte elektrolytische Produktion und Nutzbarmachung von Sauerstoff aus oxidhaltigem Ausgangsmaterial ermöglicht. Ferner kann insbesondere erreicht werden, dass keine oder lediglich eine minimierte Degradation der Anode während des Prozesses erfolgt.

Es wird ferner vorgeschlagen, dass das Verfahren einen Neutralisierungsschritt aufweist, in welchem die Sauerstoffionen an einer Innenelektrode der selektiven Sauerstoffpumpe neutralisiert werden und Sauerstoffgas erzeugt wird. Vorzugsweise erfolgt an der Kathodenseite ferner eine Neutralisierung der Kationen des Kathodenmaterials. Hierdurch kann insbesondere eine vorteilhafte Neutralisierung erreicht werden. Ferner wäre zudem denkbar, dass die selektive Sauerstoffpumpe einen integrierten Sauerstoffsensor aufweist, wobei zur Prozesskontrolle die elektrische Spannung zwischen einer Innenelektrode und einer Außenelektrode des integrierten Sauerstoffsensors ausgelesen wird. Der produzierte Sauerstoff kann insbesondere anschließend über einen vakuumdichten Gasanschluss der selektiven Sauerstoffpumpe abgeführt werden und beispielsweise zur Speicherung einem Sauerstoffreservoir zugeführt werden.

Nach einer Sauerstofferzeugung erfolgen insbesondere eine Abtrennung von Elektrolyt von dem oxidhaltigen Ausgangsmaterial und ein Recycling des Ausgangsmaterials. Hierzu wird insbesondere der Elektolytverdränger nach oben gefahren. Hierdurch wird das Eletrolytreservoir mit Elektrolyt gefüllt und der Reaktorraum wird geleert. Der Elektrolyt innerhalb des Materialbehälters wird insbesondere durch einen Heizschritt vom verbrauchten Ausgangsmaterial getrennt und aus dem Materialbehälter ausgetrieben. Die Trenntemperatur liegt insbesondere über einer Elektrolyt-Schmelztemperatur, bevorzugt um 100°C bis 300°C über der Elektrolyt-Schmelztemperatur.

Es wird ferner vorgeschlagen, dass die Durchführung unter Bedingungen reduzierter oder erhöhter Schwerkraft erfolgt. Vorzugsweise soll dieses Verfahren im Weltraum angewandt werden, wie beispielsweise bei µg in einem Raumschiff, bei einem Prozess in einem Raumschiff bei Beschleunigungen von 10⁻⁶ xg bis 10 xg, auf einem Planeten, wie dem Mars, und/oder auf einem Trabanten, wie dem Mond. Die g-Werte sind dabei insbesondere auf einem Planeten und/oder einem Asteroiden oder in einem fliegenden Raumschiff zu verstehen. Grundsätzlich kann jedoch ein g-Wert verfahrenstechnisch drastisch erhöht werden, wie beispielsweise auf 100 xg. Beispielsweise können/kann eine Anlage und/oder ein Reaktor einer künstlichen Prozessbeschleunigung ausgesetzt sein, welche von den angegebenen g-Werten abweicht. Unter "Bedingungen reduzierter Schwerkraft" sollen insbesondere Bedingungen verstanden werden, bei denen eine Schwerewirkung von maximal 0,9 xg, vorteilhaft von minimal bis 1*10⁻³ xg, vorzugsweise von minimal bis 1*10⁻⁶ xg und besonders bevorzugt von minimal bis 1*10⁻⁸ xg, wirksam ist. Ferner sollen unter "Bedingungen erhöhter Schwerkraft" insbesondere Bedingungen verstanden werden, bei denen eine Schwerewirkung von zumindest 1,1 xg, vorzugsweise bis maximal 10 xg, wirksam ist. Die Schwerewirkung kann durch Gravitation und/oder künstlich durch eine Beschleunigung erzeugt sein. Die g-Werte können grundsätzlich verfahrenstechnisch drastisch erhöht werden. Mit "g" ist der Wert der Fallbeschleunigung auf der Erde von 9,81 m/s² bezeichnet. Das Verfahren kann vorteilhaft in Lebenserhaltungssystemen und/oder in Klimaanlagen im Weltraum angewendet werden, wie beispielsweise bei Raumfahrzeugen, Habitaten im Weltraum und/oder bemannten Systemen.

Die erfindungsgemäße Elektrolysevorrichtung, das Sauerstofferzeugungssystem sowie das Verfahren sollen hierbei nicht auf die oben beschriebene Anwendung und Ausführungsform beschränkt sein. Insbesondere können die erfindungsgemäße Elektrolysevorrichtung, das erfindungsgemäße Sauerstofferzeugungssystem sowie das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Elektrolysevorrichtung mit einem Reaktorgehäuse, mit einem Materialbehälter, mit einer Kathode, mit einer Anode und mit einer selektiven Sauerstoffpumpe in einer schematischen Darstellung,
- Fig. 2: ein zweites Koppelelement einer Koppeleinheit der erfindungsgemäßen Elektrolysevorrichtung in einer schematischen Darstellung,
- Fig. 3: die selektive Sauerstoffpumpe mit einem Feststoffelektrolyten, mit einer Innenelektrode und mit einer Außenelektrode in einer schematischen Darstellung,
- Fig. 4: ein Sauerstofferzeugungssystem mit der erfindungsgemäßen Elektrolysevorrichtung, mit einer Anreicherungseinheit und mit einer Sauerstoffverarbeitungseinheit in einer schematischen Darstellung,
- Fig. 5: ein schematisches Ablaufdiagramm eines Verfahrens zu einem Betrieb der erfindungsgemäßen Elektrolysevorrichtung und
- Fig. 6: eine alternative erfindungsgemäße Elektrolysevorrichtung mit einem Reaktorgehäuse, mit einem Materialbehälter, mit einer Kathode, mit einer Anode und mit einer selektiven Sauerstoffpumpe in einer schematischen Darstellung.

### Beschreibung der Ausführungsbeispiele

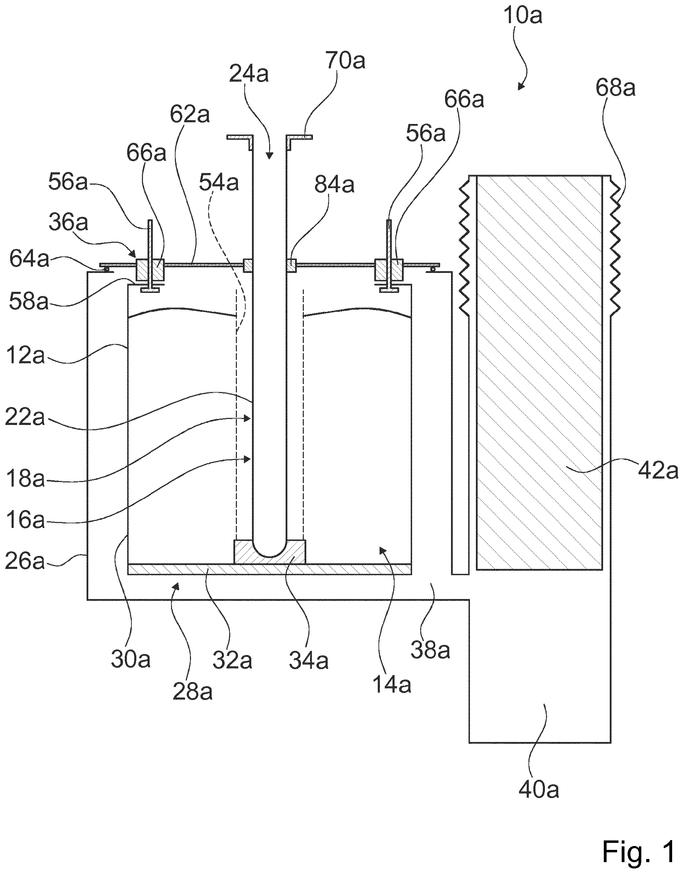

Figur 1 zeigt eine Elektrolysevorrichtung 10a zur elektrolytischen Produktion von Sauerstoff aus oxidhaltigem Ausgangsmaterial. Das oxidhaltige Ausgangsmaterial ist vorzugsweise ein Metalloxid, ein Übergangsmetalloxid und/oder ein Oxid von seltenen Erden, besonders bevorzugt sind Oxide von Eisen, Kupfer, Titan, Tantal, Aluminium, Magnesium, Silizium, Vanadium, Chrom, Mangan, Kobalt, Nickel, Wolfram, Lanthanide in Reinform oder in Mischform, insbesondere als Ilmenit, lunarer Regolith oder Mars-Regolith. Das oxidhaltige Ausgangsmaterial liegt vorzugsweise in Pulverform vor. Die Korngröße liegt insbesondere in einem Bereich von 0,1µm bis 3,0mm, bevorzugt von 1µm bis 2,5mm und besonders bevorzugt von 1,0µm bis 2,0µm. Die Elektrolysevorrichtung 10a ist zur Anwendung unter Bedingungen reduzierter oder erhöhter Schwerkraft vorgesehen. Die Elektrolysevorrichtung 10a ist zu einer Anwendung im Weltraum vorgesehen.

Die Elektrolysevorrichtung 10a weist ein Reaktorgehäuse 26a auf. Das Reaktorgehäuse 26a besteht aus einem chemisch beständigen Material, wie insbesondere aus einem Edelmetall oder einer Keramik. Bevorzugte Materialien sind Edelstahl, Platin, Tantal, mit Gold beschichtetes Metall oder Aluminiumoxid, Zirkonoxid, Magnesiumoxid, Alumina-Zirkonia, Yttrium-stabilisierter Zirkonia, Aluminiumtitanat, Mullit. Es sind jedoch auch andere, einem Fachmann als sinnvoll erscheinende Materialien denkbar. Das Reaktorgehäuse 26a weist einen Reaktorraum 38a und ein mit dem Reaktorraum 38a verbundenes Elektrolytreservoir 40a auf, welches zu einer Aufnahme eines Elektrolyten, insbesondere eines flüssigen Elektrolyten, vorgesehen ist. Das Elektrolytreservoir 40a grenzt direkt an den Reaktorraum 38a an und ist über einen Verbindungsabschnitt direkt mit dem Reaktorraum 38a verbunden. Der Reaktorraum 38a ist von einem zylindrischen Raum gebildet. Grundsätzlich wäre jedoch auch eine andere, einem Fachmann als sinnvoll erscheinende Formgebung denkbar. Das Reaktorgehäuse 26a weist an einer Oberseite des Reaktorraums 38a eine Öffnung auf, über welche der Reaktorraum 38a zugänglich gemacht werden kann. Die Öffnung des Reaktorgehäuses 26a ist während eines Betriebs insbesondere geschlossen. Das Reaktorgehäuse 26a weist einen Deckel 62a auf, welcher zu einem Verschließen des Reaktorgehäuses 26a vorgesehen ist. Der Deckel 62a ist von einem chemisch beständigen und abnehmbaren Deckel 62a gebildet. Der Deckel 62a ist über eine chemisch beständige Dichtung 64a auf das restliche Reaktorgehäuse 26a aufgesetzt.

Das Elektrolytreservoir 40a ist in zumindest einem Betriebszustand mit einem Elektrolyten gefüllt. Der Elektrolyt ist auf Basis ionischer Flüssigkeiten. Es sind verschiedene, einem Fachmann als sinnvoll erscheinende Elektrolyten denkbar, wie insbesondere Calciumchlorid, Lithiumchlorid, Natriumchlorid, Magnesiumchlorid in Reinform oder mit Zusätzen von CaO, Li₂O, Na₂O, MgO, jeweils mit einem Anteil, insbesondere kleiner 10%.

Die Elektrolysevorrichtung 10a weist ferner einen Elektrolytverdränger 42a auf. Der Elektrolytverdränger 42a ist dazu vorgesehen, in einem Betriebszustand den Elektrolyten aus dem Elektrolytreservoir 40a in den Reaktorraum 38a zu verdrängen. Der Elektrolytverdränger 42a ist von einem zylindrischen Kolben gebildet. Der Elektrolytverdränger 42a besteht aus einem chemisch beständigen Material. Der Elektrolytverdränger 42a ist von einem Verdrängerkolben gebildet, welcher in das Elektrolytreservoir 40a hinein oder aus dem Elektrolytreservoir 40a heraus bewegt werden kann. Der Elektrolytverdränger 42a ist beispielhaft mittels eines Spindeltriebs elektrisch verstellbar ausgebildet. Der Elektrolytverdränger 42a ist gegenüber dem Reaktorgehäuse 26a abgedichtet ausgebildet. Der Elektrolytverdränger 42a ist über einen Wellbalg 68a mit dem Reaktorgehäuse 26a verbunden, um eine abgedichtete Bewegung des Elektrolytverdrängers 42a innerhalb des Reaktorgehäuses 26a zu ermöglichen. Der Elektrolytverdränger 42a kann so insbesondere von außerhalb des Reaktorgehäuses 26a bewegt werden. Abhängig von einer Position des Elektrolytverdrängers 42a kann eine Verdrängung des Elektrolyten gesteuert werden. Der Elektrolytverdränger 42a weist vorzugsweise zumindest zwei Betriebsstellungen auf. In einer ersten Betriebsstellung befindet sich der Elektrolytverdränger 42a in einer oberen maximalen Position, sodass das Elektrolytreservoir 40a vollständig den Elektrolyten aufnimmt. In einer zweiten Betriebsstellung befindet sich der Elektrolytverdränger 42a in einer unteren maximalen Position, in welcher sich der Elektrolytverdränger 42 in dem Elektrolytreservoir 40a befindet, sodass der Elektrolyt zu einem wesentlichen Teil aus dem Elektrolytreservoir 40a verdrängt ist.

Ferner weist die Elektrolysevorrichtung 10a einen, in zumindest einem Betriebszustand in dem Reaktorgehäuse 26a angeordneten Materialbehälter 28a auf, der in zumindest einem Betriebszustand zu einer Aufnahme des oxidhaltigen Ausgangsmaterials vorgesehen ist. Der Materialbehälter 28a begrenzt einen Aufnahmebereich 14a zu einer Aufnahme des oxidhaltigen Ausgangsmaterials. Der Materialbehälter 28a ist von einem zylindrischen Behälter gebildet. Der Materialbehälter 28a weist eine kreisförmige Bodenplatte 32a und eine hohlzylindrische Außenwand 30a auf. Die Außenwand 30a ist direkt mit der Bodenplatte 32a verbunden. Grundsätzlich wäre jedoch auch eine andere, einem Fachmann als sinnvoll erscheinende Formgebung des Materialbehälters 28a denkbar. Der Materialbehälter 28a ist bereichsweise durchlässig ausgebildet. Die Außenwand 30a des Materialbehälters 28a ist für den flüssigen Elektrolyten durchlässig ausgebildet. Der Elektrolyt kann zu einer Benetzung des oxidhaltigen Ausgangsmaterials durch den Materialbehälter 28a in den Aufnahmebereich 14a des Materialbehälters 28a gelangen.

Der Materialbehälter 28a ist, zumindest während eines Elektrolysevorgangs, in dem Reaktorgehäuse 26a aufgenommen. Vorzugsweise ist der Materialbehälter 28a herausnehmbar in das Reaktorgehäuse 26a eingesetzt ausgebildet, wobei der Materialbehälter 28a vollständig aus dem Reaktorgehäuse 26a entfernt werden kann.

Des Weiteren weist die Elektrolysevorrichtung 10a eine Kathode 12a auf, welche teilweise den Aufnahmebereich 14a begrenzt, welcher in zumindest einem Betriebszustand zu einer Aufnahme des oxidhaltigen Ausgangsmaterials vorgesehen ist. Die Außenwand 30a des Materialbehälters 28a ist von der Kathode 12a gebildet. Die umlaufende Außenwand 30a des Materialbehälters 28a ist vollständig von der Kathode 12a gebildet. Die Kathode 12a ist in den Materialbehälter 28a integriert. Die Außenwand 30a besteht aus einem chemisch beständigen und elektrisch leitfähigen Material, wie beispielsweise Edelstahl, Platin, Tantal und/oder mit Gold beschichtetem Metall. Die Außenwand 30a des Materialbehälters 28a enthält eine Mikrostruktur, die für den Elektrolyten durchlässig ist. Die Bodenplatte 32a ist elektrisch isolierend ausgebildet. Die Bodenplatte 32a besteht insbesondere aus Keramik, besonders bevorzugte Materialien sind insbesondere Aluminiumoxid, Zirkonoxid, Magnesiumoxid, Zirkonia, Yttrium-stabilisierter Zirkonia, Aluminiumtitanat und/oder Mullit. Der Materialbehälter 28a weist ferner eine Innenwand 54a auf. Die Innenwand 54a ist hohlzylindrisch ausgebildet. Die Innenwand 54a ist mit der Bodenplatte 32a verbunden. Die Innenwand 54a ist konzentrisch zu der Außenwand 30a ausgebildet. Die Innenwand 54a begrenzt den Aufnahmebereich 14a zu einer Aufnahme des oxidhaltigen Ausgangsmaterials nach innen hin. Der Aufnahmebereich 14a zu einer Aufnahme des oxidhaltigen Ausgangsmaterials erstreckt sich zwischen der Innenwand 54a und der Außenwand 30a. Die Innenwand 54a ist von einer permeablen Innenwand gebildet. Die Innenwand 54a ist insbesondere von einem Sieb oder Gitter, einem Metallschaum und/oder einer poröse Keramik gebildet. Die Innenwand 54a weist insbesondere eine Lochgröße von 1µm bis 200µm, bevorzugt von 1µm bis 50µm auf.

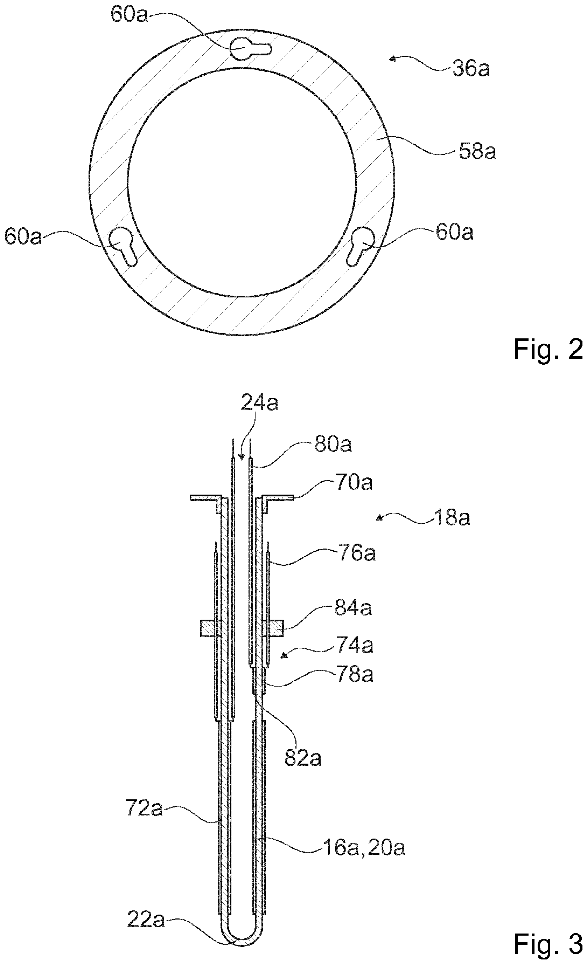

Die Elektrolysevorrichtung 10a weist ferner eine Koppeleinheit 36a auf. Die Koppeleinheit 36a ist zu einer lösbaren Verbindung des Materialbehälters 28a mit dem Reaktorgehäuse 26a vorgesehen. Die Koppeleinheit 36a ist zumindest teilweise von einem Schlüssellochverbinder gebildet. Die Koppeleinheit 36a weist zumindest ein erstes Koppelelement 56a auf, welches fest mit dem Reaktorgehäuse 26a verbunden ist. Die Koppeleinheit 36a weist mehrere erste Koppelelemente 56a auf. Die ersten Koppelelemente 56a sind mit dem Deckel 62a des Reaktorgehäuses 26a verbunden. Die ersten Koppelelemente 56a sind von elektrisch leitenden Haltern gebildet, welche an einem unteren Ende jeweils einen Halteteller aufweisen. Die ersten Koppelelemente 56a bestehen vorzugsweise aus einem Edelmetall, besonders bevorzugt aus Edelstahl, Platin, Tantal und/oder mit Gold beschichtetem Metall. Die ersten Koppelelemente 56a sind über elektrisch isolierende Durchführungen 66a mit dem Deckel 62a gekoppelt. Die Durchführungen 66a bestehen bevorzugt aus Keramik, besonders bevorzugt aus Aluminiumoxid, Zirkonoxid, Magnesiumoxid, Zirkonia, Yttrium-stabilisiertem Zirkonia, Aluminiumtitanat und/oder Mullit. Die Koppeleinheit 36a weist ferner ein zweites Koppelelement 58a auf, welches fest mit dem Materialbehälter 28a verbunden ist. Das zweite Koppelelement 58a ist fest mit der Außenwand 30a des Materialbehälters 28a verbunden. Das zweite Koppelelement 58a ist von einem Ring gebildet, welcher in Umfangsrichtung verteilt mehrere Ausnehmungen 60a, insbesondere schlüssellochförmige Ausnehmungen 60a, aufweist (Fig. 2). Die ersten Koppelelemente 56a sind dazu vorgesehen, in die Ausnehmungen 60a eingehängt zu werden, wobei durch das Einhängen insbesondere zudem eine elektrische Verbindung hergestellt wird. Vorzugsweise ist der Materialbehälter 28a mittels der Koppeleinheit 36a zu einer Befüllung mit dem oxidhaltigen Ausgangsmaterial vollständig aus dem Reaktorgehäuse 26a entfernbar.

Ferner weist die Elektrolysevorrichtung 10a eine selektive Sauerstoffpumpe 18a auf. Die selektive Sauerstoffpumpe 18a ist über eine elektrisch isolierende Durchführung 84a in dem Deckel 62a gehalten. Die selektive Sauerstoffpumpe 18a ragt in einen von der Innenwand 54a begrenzten Bereich innerhalb des Aufnahmebereichs 14a. Die selektive Sauerstoffpumpe 18a ist über die Innenwand 54a von dem Aufnahmebereich 14a getrennt. Die selektive Sauerstoffpumpe 18a erstreckt sich konzentrisch zu der Außenwand 30a und der Innenwand 54a. Die Durchführung 84a besteht bevorzugt aus Keramik, besonders bevorzugt aus Aluminiumoxid, Zirkonoxid, Magnesiumoxid, Zirkonia, Yttrium-stabilisiertem Zirkonia, Aluminiumtitanat und/oder Mullit. Die selektive Sauerstoffpumpe 18a ist von einer elektrochemischen Sauerstoffpumpe gebildet. Die selektive Sauerstoffpumpe 18a weist einen Feststoffelektrolyten 22a auf, der zu einem selektiven Transfer von Sauerstoff aus dem Aufnahmebereich 14a in einen Pumpraum 24a vorgesehen ist. Der Feststoffelektrolyt 22a ist von einem Zirkoniumoxidelement gebildet. Der Feststoffelektrolyt 22a ist von einer Zirkoniumoxidkeramik gebildet. Der Feststoffelektrolyt 22a der selektiven Sauerstoffpumpe 18a ist von einem dotierten Zirkoniumoxidelement gebildet. Das Zirkoniumoxidelement ist mit Yttriumoxid (Y₂O₃) dotiert. Grundsätzlich wäre jedoch auch denkbar, dass der Feststoffelektrolyt 22a von einem undotierten Zirkoniumoxidelement gebildet ist. Der Feststoffelektrolyt 22a ist dazu von einem Zirkoniumoxidröhrchen gebildet, welches an einer Seite, insbesondere an einer Unterseite, geschlossen ist. Der Feststoffelektrolyt 22a weist eine hohlzylindrische Grundform auf. Der Feststoffelektrolyt 22a ist "reagenzglasförmig" ausgebildet. Grundsätzlich ist jedoch auch eine andere, einem Fachmann als sinnvoll erscheinende Formgebung denkbar. Beispielsweise ist auch eine flächige Ausgestaltung des Feststoffelektrolyten 22a denkbar. Der Feststoffelektrolyt 22a bildet einen Hohlraum aus, welcher den Pumpraum 24a ausbildet. Der Feststoffelektrolyt 22a ragt mit einer geschlossenen Seite in den Aufnahmebereich 14a. Eine geöffnete Seite des Feststoffelektrolyten 22a ragt aus dem Reaktorgehäuse 26a. Die selektive Sauerstoffpumpe 18a weist an der geöffneten Seite des Feststoffelektrolyten 22a einen, insbesondere vakuumdichten, Gasanschluss 70a auf. Der Gasanschluss 70a ist insbesondere zu einer Kopplung der selektiven Sauerstoffpumpe 18a mit einer Gasleitung. Der Feststoffelektrolyt 22a wirkt als selektive Sauerstoffpumpe, welche nur Sauerstoff transportiert, wenn der Feststoffelektrolyt 22a auf Betriebstemperatur ist und ein Pumpstrom zwischen einer Innenseite und einer Außenseite des Feststoffelektrolyten 22a fließt. Die selektive Sauerstoffpumpe 18a ist dabei zu einer elektrischen Reduktion zumindest eines Gases vorgesehen (Fig. 3).

Des Weiteren weist die selektive Sauerstoffpumpe 18a eine Innenelektrode 20a auf. Die Innenelektrode 20a ist auf einer dem Aufnahmebereich 14a abgewandten Seite der Sauerstoffpumpe 18a angeordnet. Die Innenelektrode 20a ist direkt auf einer Innenseite des Feststoffelektrolyten 22a angeordnet. Der Feststoffelektrolyt 22a weist eine annähernd hohlzylindrische Form auf, wobei die Innenelektrode 20a auf einer Innenfläche des Feststoffelektrolyten 22a angeordnet ist. Die Innenelektrode 20a ist auf einer dem Pumpraum 24a zugewandten Innenseite des Feststoffelektrolyten 22a angeordnet. Die Innenelektrode 20a erstreckt sich über einen wesentlichen Teil einer Innenseite des Feststoffelektrolyten 22a. Die Innenelektrode 20a ist zwischen dem Feststoffelektrolyten 22a und dem Pumpraum 24a angeordnet. Die Innenelektrode 20a ist von einer strukturierten Elektrode mit Freistellen zwischen dem Elektrodenmaterial gebildet. Die Innenelektrode 20a besteht zumindest teilweise aus Platin. Die selektive Sauerstoffpumpe 18a weist ferner eine Außenelektrode 72a auf. Es wäre auch denkbar, dass auf eine Außenelektrode 72a verzichtet werden kann. Bei einer Ausführung ohne eine Außenelektrode 72a wird eine Pumpspannung, insbesondere eine Gleichspannung, insbesondere direkt, zwischen der Innenelektrode 20a und der Kathode 12a der Elektrolysevorrichtung 10a angelegt. Für den Betrieb der Ausführung mit der Außenelektrode 72a wird zusätzlich eine Pumpspannung, insbesondere eine Gleichspannung, zwischen der Innenelektrode 20a und der Außenelektrode 72a angelegt, die kleiner ist als die Spannung zwischen der Innenelektrode 20a und der Kathode 12a. Die Außenelektrode 72a ist von einer strukturierten Elektrode mit Freistellen zwischen dem Elektrodenmaterial gebildet. Die Außenelektrode 72a besteht zumindest teilweise aus Platin. Die Außenelektrode 72a ist auf einer dem Aufnahmebereich 14a zugewandten Seite der Sauerstoffpumpe 18a angeordnet. Die Außenelektrode 72a ist direkt auf einer Außenseite des Feststoffelektrolyten 22a angeordnet. Die Außenelektrode 72a ist auf einer dem Pumpraum 24a abgewandten Außenseite des Feststoffelektrolyten 22a angeordnet. Die Innenelektrode 20a und/oder die Außenelektrode 72a können/kann zusätzlich als Katalysator zur Dissoziation von sauerstoffhaltigen Gasen, wie beispielsweise SO₂, CO₂, NO, NO₂ oder Os, und/oder zur selektiven Abtrennung von Sauerstoff dienen. Insbesondere sind auch andere Elektrodenmaterialien denkbar, wie beispielsweise Palladium, Rhodium, Cobalt, Iridium und/oder Nickel (Fig. 3).

Die Innenelektrode 20a ist über eine elektrisch isolierte Zuleitung mit einer nicht weiter sichtbaren Energiequelle verbunden. Die Außenelektrode 72a ist über eine elektrisch isolierte und chemisch beständige Zuleitung mit der nicht weiter sichtbaren Energiequelle verbunden. Die Energiequelle bildet eine Spannungsquelle der Innenelektrode 20a und der Außenelektrode 72a sowie der Kathode 12a.

Die Elektrolysevorrichtung 10a weist ferner eine Messeinheit 74a auf. Die Messeinheit 74a ist dazu vorgesehen, eine Spannungsdifferenz zwischen zwei Seiten der selektiven Sauerstoffpumpe 18a zu erfassen. Die Messeinheit 74a ist dazu vorgesehen, eine Spannungsdifferenz zwischen einer ersten, dem Aufnahmebereich 14a zugewandten Seite und einer zweiten, dem Pumpraum 24a zugewandten Seite der selektiven Sauerstoffpumpe 18a zu erfassen. Die Messeinheit 74a weist dazu einen Spannungsmesser auf. Die Messeinheit 74a ist über eine erste Leitung 76a mit einer ersten Messelektrode 78a der selektiven Sauerstoffpumpe 18a verbunden. Die erste Messelektrode 78a ist auf einer Außenseite des Feststoffelektrolyten 22a angeordnet. Die erste Messelektrode 78a ist chemisch beständig ausgebildet. Die erste Messelektrode 78a besteht aus Platin. Ferner ist die Messeinheit 74a über eine Leitung 80a mit einer zweiten Messelektrode 82a verbunden. Die zweite Messelektrode 82a ist auf einer dem Pumpraum 24a zugewandten Innenseite des Feststoffelektrolyten 22a angeordnet. Die zweite Messelektrode 82a besteht aus Platin. Die Messelektroden 78a, 82a sind ringförmig ausgebildet und erstrecken sich umlaufend entlang dem Feststoffelektrolyten 22a. Die Messeinheit 74a ist dazu vorgesehen, eine Spannungsdifferenz zwischen der ersten Messelektrode 78a und der zweiten Messelektrode 82a zu erfassen (Fig. 3).

Ferner weist die Elektrolysevorrichtung 10a eine Anode 16a auf. Die Anode 16a ist teilweise einstückig mit der selektiven Sauerstoffpumpe 18a ausgebildet. Die Innenelektrode 20a der selektiven Sauerstoffpumpe 18a bildet die Anode 16a aus. Die selektive Sauerstoffpumpe 18a kombiniert die Funktion einer Pumpe und der Anode 16a. Die Innenelektrode 20a bildet sowohl eine Elektrode der selektiven Sauerstoffpumpe 18a als auch die Elektrode der Anode 16a aus.

Die Bodenplatte 32a des Materialbehälters 28a weist ferner ein elektrisch isolierendes Ausrichtungselement 34a zu einer Ausrichtung der selektiven Sauerstoffpumpe 18a relativ zu der Kathode 12a auf. Das Ausrichtungselement 34a ist dazu vorgesehen, die selektive Sauerstoffpumpe 18a gegenüber der Kathode 12a zu zentrieren. Das Ausrichtungselement 34a ist dazu vorgesehen, das geschlossene Ende des Feststoffelektrolyten 22a der selektiven Sauerstoffpumpe 18a aufzunehmen und in zumindest einer Ebene auszurichten. Das Ausrichtungselement 34a weist eine Ausnehmung auf, welche zu einer Aufnahme zumindest eines Endes der selektiven Sauerstoffpumpe 18a vorgesehen ist. Das Ausrichtungselement 34a besteht bevorzugt aus einer elektrisch isolierenden Keramik, besonders bevorzugt aus Aluminiumoxid, Zirkonoxid, Magnesiumoxid, Zirkonia, Yttrium-stabilisiertem Zirkonia, Aluminiumtitanat und/oder Mullit.

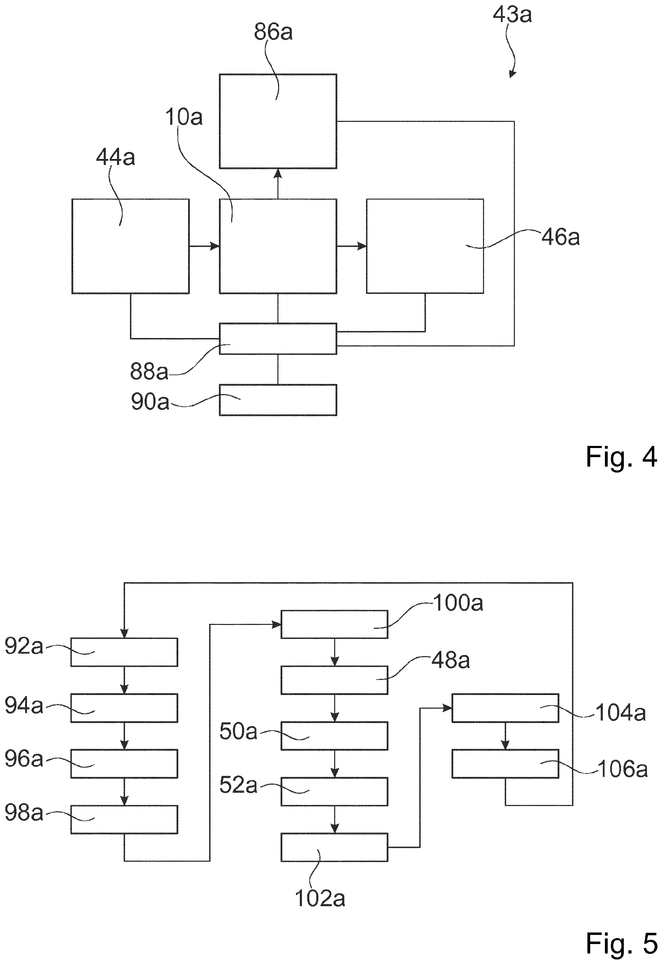

Figur 4 zeigt ferner schematisch ein Sauerstofferzeugungssystem 43a. Das Sauerstofferzeugungssystem 43a ist zu einer Erzeugung und anschließenden Speicherung und/oder Verwertung von Sauerstoff vorgesehen. Das Sauerstofferzeugungssystem 43a bildet ein in sich geschlossenes System aus. Das Sauerstofferzeugungssystem 43a weist die Elektrolysevorrichtung 10a zur elektrolytischen Produktion von Sauerstoff aus oxidhaltigem Ausgangsmaterial auf. Ferner weist das Sauerstofferzeugungssystem 43a eine Anreicherungseinheit 44a zu einer Anreicherung des oxidhaltigen Ausgangsmaterials für die Elektrolysevorrichtung 10a auf. Die Anreicherungseinheit 44a ist zu einer Selektion und zu einer Anreicherung einer vorteilhaften chemischen Zusammensetzung und Körnung des Ausgangsmaterials und zu einer Bereitstellung der zur Füllung des Aufnahmebereichs 14a der Elektrolysevorrichtung 10a benötigten Menge an oxidhaltigem Ausgangsmaterial vorgesehen. Die Anreicherungseinheit 44a ist direkt mit der Elektrolysevorrichtung 10a verbunden. Die Anreicherungseinheit 44a weist beispielhaft zumindest ein Zerkleinerungselement auf, welches zu einer Aufbereitung des oxidhaltigen Ausgangsmaterials vorgesehen ist.

Das Sauerstofferzeugungssystem 43a weist eine Sauerstoffverarbeitungseinheit 46a auf. Die Sauerstoffverarbeitungseinheit 46a ist zur Speicherung von produziertem Sauerstoff und/oder zu einer Erzeugung von Wasser aus Sauerstoffgas vorgesehen. Die Sauerstoffverarbeitungseinheit 46a ist beispielhaft zu einer Umwandlung des mittels der Elektrolysevorrichtung 10a erzeugten Sauerstoffs in Wasser vorgesehen. Die Sauerstoffverarbeitungseinheit 46a ist über eine Gasleitung mit der selektiven Sauerstoffpumpe 18a der Elektrolysevorrichtung 10a verbunden. Die Sauerstoffverarbeitungseinheit 46a wird von der Elektrolysevorrichtung 10a mit Sauerstoffgas versorgt. Die Sauerstoffverarbeitungseinheit 46a ist zu einer Erzeugung von Wasser aus Sauerstoffgas vorgesehen. Die Sauerstoffverarbeitungseinheit 46a weist eine Brennstoffzelle auf, welche dazu vorgesehen ist, die chemische Reaktionsenergie aus der Wassererzeugung in elektrische Energie umzuwandeln. Die Sauerstoffverarbeitungseinheit 46a ist neben der Erzeugung von Wasser zu einer Produktion von elektrischer Energie durch eine chemische Reaktion des produzierten Sauerstoffs mit Wasserstoff mittels der Brennstoffzelle vorgesehen. Die erzeugte elektrische Energie kann wiederum der Elektrolysevorrichtung 10a zur Durchführung der Elektrolyse zugeführt werden. Das erzeugte Wasser kann insbesondere in einem Wasserbehälter gespeichert werden. Alternativ wäre auch denkbar, dass eine chemische Reaktion des produzierten Sauerstoffs mit Wasserstoff zu Wasser in einer Brennkammer erfolgt. Die dabei erzeugte Wärme könnte insbesondere der Elektrolysevorrichtung 10a zugeführt werden, während das erzeugte Wasser in einem Wasserbehälter gespeichert wird.

Das Sauerstofferzeugungssystem 43a weist ferner eine Aufnahmeeinheit 86a für verbrauchtes Ausgangsmaterial auf. Die Aufnahmeeinheit 86a ist direkt mit der Elektrolysevorrichtung 10a gekoppelt. Die Aufnahmeeinheit 86a ist zu einer Aufnahme und Speicherung von reduziertem Ausgangsmaterial aus dem Materialbehälter 28a vorgesehen. Die Aufnahmeeinheit 86a ist zur Speicherung des reduzierten Ausgangsmaterials unter Inertgas-Atmosphäre oder Vakuum bis zur Weiterverarbeitung vorgesehen. Hierdurch kann ein Risiko der Entflammbarkeit gering gehalten werden.

Des Weiteren weist das Sauerstofferzeugungssystem 43a eine lokale Kontrolleinheit 88a zur einer Steuerung und Regelung der Prozesse des Sauerstofferzeugungssystems 43a sowie einen Remote-System-Controller 90a zu einer Ansteuerung des Kontrolleinheit 88a auf.

Vorzugsweise sind zumindest die Elektrolysevorrichtung 10a, die Anreicherungseinheit 44a, die Sauerstoffverarbeitungseinheit 46a, die Aufnahmeeinheit 86a und die Kontrolleinheit 88a nebeneinander und/oder in einem Gehäuse und/oder am gleichen Ort angeordnet. Hierdurch kann eine kompakte und leichte Bauweise erreicht werden.

Figur 5 zeigt ein schematisches Ablaufdiagramm eines Verfahrens zu einem Betrieb der Elektrolysevorrichtung 10a. Bei dem Verfahren erfolgt vor einer direkte elektrolytischen Sauerstoffproduktion ein Entleeren und Befüllen des Aufnahmebereichs 14a des Materialbehälters 28a. Dazu wird in einem ersten Verfahrensschritt 92a der Deckel 62a geöffnet und gemeinsam mit dem Materialbehälter 28a aus dem Reaktorgehäuse 26a entfernt. Anschließend wird in einem weiteren Verfahrensschritt 94a der Materialbehälter 28a gedreht, bis die runden Teilbereiche der Ausnehmungen 60a des zweiten Koppelelements 58a über den ersten Koppelelementen 56a stehen und der Materialbehälter 28a von dem Deckel 62a getrennt werden kann. Darauffolgend wird in einem weiteren Verfahrensschritt 96a der Materialbehälter 28a entleert und mit Ausgangsmaterial befüllt. Anschließend wird der Materialbehälter 28a in einem weiteren Verfahrensschritt 98a wieder an den Deckel 62a angebaut und der Deckel 62a wird mittels der Dichtung 64a vakuumdicht auf dem Reaktorgehäuse 26a befestigt.

Anschließend erfolgt bei dem Verfahren eine direkte elektrolytische Sauerstoffproduktion. Dazu erfolgt in einem ersten Verfahrensschritt 100a der direkten elektrolytischen Sauerstoffproduktion ein Aufheizen des Reaktorgehäuses 26a sowie des Materialbehälters 28a auf Arbeitstemperatur. Die Arbeitstemperatur liegt über einer Elektrolyt-Schmelztemperatur, bevorzugt um 20°C bis 200°C über der Elektrolyt-Schmelztemperatur. Die Arbeitstemperatur beträgt besonders bevorzugt zwischen 700°C und 950°C. Ferner wird in dem ersten Verfahrensschritt 100a der direkten elektrolytischen Sauerstoffproduktion der Elektrolytverdränger 42a nach unten gefahren, das Elektrolytreservoir 40a geleert und der Reaktorraum 38a mit dem Elektrolyten gefüllt. Anschließend wird in einem Löseschritt 48a das oxidhaltige Ausgangsmaterial zu einem Herauslösen von Sauerstoffionen, insbesondere von Sauerstoffanionen, mit dem Elektrolyten in Kontakt gebracht. Der Elektrolyt diffundiert dazu in dem Löseschritt 48a durch eine mikrostrukturierte Außenwand 30a in den Materialbehälter 28a hinein. Darauf folgt ein Pumpschritt 50a des Verfahrens, in welchem die herausgelösten Sauerstoffionen mittels der selektiven Sauerstoffpumpe 18a aus dem Aufnahmebereich 14a in den Pumpraum 24a gepumpt werden. In dem Pumpschritt 50a wird eine Gleichspannung zwischen der Kathode 12a und der Anode 16a bzw. der Innenelektrode 20a angelegt. Bei der gezeigten Ausgestaltung mit der zusätzlichen Außenelektrode 72a wird eine weitere Gleichspannung zwischen der Innenelektrode 20a und der Außenelektrode 72a angelegt, die kleiner ist als die Spannung zwischen der Innenelektrode 20a und dem Materialbehälter 28a. Der Pumpschritt 50a wird insbesondere mittels der Messeinheit 74a zur Prozesskontrolle überwacht. Anschließend folgt ein Neutralisierungsschritt 52a, in welchem die Sauerstoffionen an der Innenelektrode 20a der selektiven Sauerstoffpumpe 18a neutralisiert werden und Sauerstoffgas erzeugt wird. Ferner erfolgt in dem Neutralisierungsschritt 52a an der Kathodenseite eine Neutralisierung der Kationen des Kathodenmaterials. Anschließend wird der produzierte Sauerstoff in einem weiteren Verfahrensschritt 102a über den vakuumdichten Gasanschluss 70a abgeführt, beispielsweise zur Speicherung in einem Sauerstoffreservoir.

Nach der direkten elektrolytischen Sauerstoffproduktion erfolgt insbesondere eine Abtrennung von Elektrolyt von dem oxidhaltigen Ausgangsmaterial sowie ein Recycling des Ausgangsmaterials. Hierzu wird in einem ersten Verfahrensschritt 104a der Elektrolytverdränger 42a nach oben gefahren. Hierdurch wird das Elektrolytreservoir 40a mit Elektrolyt gefüllt und der Reaktorraum 38a geleert. Der Elektrolyt innerhalb des Materialbehälters 28a wird anschließend durch einen Heizschritt 106a vom verbrauchten Ausgangsmaterial getrennt und aus dem Materialbehälter 28a ausgetrieben. Die Trenntemperatur liegt insbesondere über einer Elektrolyt-Schmelztemperatur, bevorzugt um 100°C bis 300°C über der Elektrolyt-Schmelztemperatur.

In einer alternativen Ausführung besteht der Elektrolyt insbesondere aus einer ionischen Flüssigkeit mit einer Schmelztemperatur zwischen 50°C und 500°C, bevorzugt zwischen 100°C und 350°C, während der Feststoffelektrolyt 22a der Sauerstoffpumpe 18a aus einem Niedrigtemperatur-Sauerstoffionenleiter besteht. Der Elektrolyt besteht besonders vorteilhaft aus einer Mischung aus Polyethylen-Glyme und Butyl-pyrrolidinium-bis-(trifluoromethanesulfonyl)-Imid, Acetylcholin und Wasser, N-butyl-N-methyl pyrrolidinium-bis(trifluoromethanesulfonyl)-Imid. Der Feststoffelektrolyt 22a besteht bevorzugt aus Bismuth-Iridium (Bil₃), dotiertem Cer-Oxid und/oder Lanthan-Strontium-Gallium-Magnesium-Mischoxid.

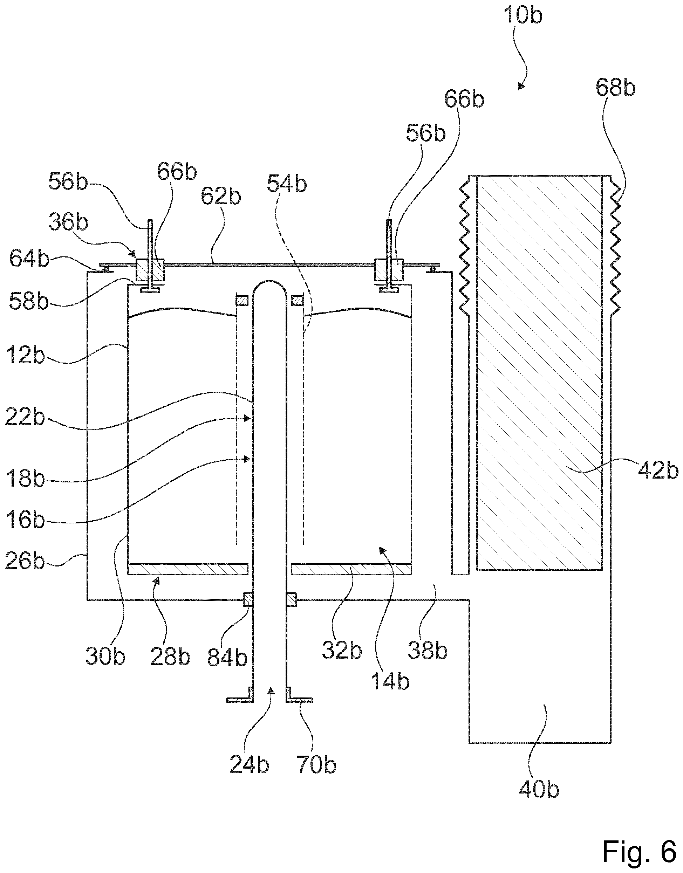

In der Figur 6 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 5 verwiesen werden kann. Zur Unterscheidung der Ausführungsbeispiele ist der Buchstabe a in den Bezugszeichen des Ausführungsbeispiels in den Figuren 1 bis 5 durch den Buchstaben b in den Bezugszeichen des Ausführungsbeispiels der Figur 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 5 verwiesen werden.

Figur 6 zeigt eine Elektrolysevorrichtung 10b zur elektrolytischen Produktion von Sauerstoff aus oxidhaltigem Ausgangsmaterial. Die Elektrolysevorrichtung 10b weist ein Reaktorgehäuse 26b auf. Das Reaktorgehäuse 26b weist an einer Oberseite eines Reaktorraums 38b eine Öffnung auf, über welche der Reaktorraum 38b zugänglich gemacht werden kann. Das Reaktorgehäuse 26b weist einen Deckel 62b auf, welcher zu einem Verschließen des Reaktorgehäuses 26b vorgesehen ist.

Ferner weist die Elektrolysevorrichtung 10b einen in zumindest einem Betriebszustand in dem Reaktorgehäuse 26b angeordneten Materialbehälter 28b auf, der in zumindest einem Betriebszustand zu einer Aufnahme des oxidhaltigen Ausgangsmaterials vorgesehen ist.

Ferner weist die Elektrolysevorrichtung 10b eine selektive Sauerstoffpumpe 18b auf. Die selektive Sauerstoffpumpe 18b ist über eine elektrisch isolierende Durchführung 84b in dem Reaktorgehäuse 26b gehalten. Die selektive Sauerstoffpumpe 18b ragt von unten in einen von einer Innenwand 54b begrenzten Bereich innerhalb eines Aufnahmebereichs 14b. Die selektive Sauerstoffpumpe 18b ist über die Innenwand 54b von dem Aufnahmebereich 14b getrennt. Die selektive Sauerstoffpumpe 18b erstreckt sich konzentrisch zu einer Außenwand 30b und der Innenwand 54b. Die Durchführung 84b befindet sich in einem Boden des Reaktorraums 38b und besteht bevorzugt aus Keramik, besonders bevorzugt aus Aluminiumoxid, Zirkonoxid, Magnesiumoxid, Zirkonia, Yttrium-stabilisiertem Zirkonia, Aluminiumtitanat und/oder Mullit. Die selektive Sauerstoffpumpe 18b weist einen Feststoffelektrolyt 22b auf, der zu einem selektiven Transfer von Sauerstoff aus dem Aufnahmebereich 14b in einen Pumpraum 24b vorgesehen ist. Der Feststoffelektrolyt 22b ist von einem Zirkoniumoxidelement gebildet. Der Feststoffelektrolyt 22b ist dazu von einem Zirkoniumoxidröhrchen gebildet, welches an seiner Oberseite geschlossen ist. Der Feststoffelektrolyt 22b ist "reagenzglasförmig" ausgebildet. Die selektive Sauerstoffpumpe 18b ist fest in dem Reaktorgehäuse 26b eingebaut und wird nicht zusammen mit dem Materialbehälter 28b bei einer Befüllung herausgenommen. Der Aufbau ermöglicht ein Entleeren und Befüllen des Materialbehälters 28b, ohne dass dabei die selektive Sauerstoffpumpe 18b vom Reaktorgehäuse 26b entfernt wird.

### Bezugszeichen

- 10: Elektrolysevorrichtung
- 12: Kathode
- 14: Aufnahmebereich
- 16: Anode
- 18: Sauerstoffpumpe
- 20: Innenelektrode
- 22: Feststoffelektrolyt
- 24: Pumpraum
- 26: Reaktorgehäuse
- 28: Materialbehälter
- 30: Außenwand
- 32: Bodenplatte
- 34: Ausrichtungselement
- 36: Koppeleinheit
- 38: Reaktorraum
- 40: Elektrolytreservoir
- 42: Elektrolytverdränger
- 43: Sauerstofferzeugungssystem
- 44: Anreicherungseinheit
- 46: Sauerstoffverarbeitungseinheit
- 48: Löseschritt
- 50: Pumpschritt
- 52: Neutralisierungsschritt
- 54: Innenwand
- 56: Koppelelement
- 58: Koppelelement
- 60: Ausnehmung
- 62: Deckel
- 64: Dichtung
- 66: Durchführung
- 68: Wellbalg
- 70: Gasanschluss
- 72: Außenelektrode
- 74: Messeinheit
- 76: Leitung
- 78: Messelektrode
- 80: Leitung
- 82: Messelektrode
- 84: Durchführung
- 86: Aufnahmeeinheit
- 88: Kontrolleinheit
- 90: Remote-System-Controller
- 92: Verfahrensschritt
- 94: Verfahrensschritt
- 96: Verfahrensschritt
- 98: Verfahrensschritt
- 100: Verfahrensschritt
- 102: Verfahrensschritt
- 104: Verfahrensschritt
- 106: Heizschritt

## Patentansprüche

1. Elektrolysevorrichtung zur elektrolytischen Produktion von Sauerstoff aus oxidhaltigem Ausgangsmaterial, mit zumindest einer Kathode (12a; 12b), welche zumindest teilweise einen Aufnahmebereich (14a; 14b) begrenzt, welcher in zumindest einem Betriebszustand zu einer Aufnahme des oxidhaltigem Ausgangsmaterial vorgesehen ist, mit zumindest einer Anode (16a; 16b), und mit zumindest einer, zumindest teilweise einstückig mit der Anode (16a; 16b) ausgebildeten selektiven Sauerstoffpumpe (18a; 18b), wobei ein Reaktorgehäuse (26a; 26b), welches zumindest einen Reaktorraum (38a; 38b) und zumindest ein mit dem Reaktorraum (38a; 38b) verbundenes Elektrolytreservoir (40a; 40b) aufweist, welches zu einer Aufnahme eines Elektrolyten vorgesehen ist,
**gekennzeichnet durch**
zumindest einen, in zumindest einem Betriebszustand in dem Reaktorgehäuse (26a; 26b) angeordneten Materialbehälter (28a; 28b), der in zumindest einem Betriebszustand zu einer Aufnahme des oxidhaltigen Ausgangsmaterials vorgesehen ist, wobei der zumindest eine Materialbehälter (28a) zumindest eine Bodenplatte (32a) aufweist, die zumindest ein elektrisch isolierendes Ausrichtungselement (34a) zu einer Ausrichtung der zumindest einen selektiven Sauerstoffpumpe (18a) relativ zu der Kathode (12a) aufweist.

2. Elektrolysevorrichtung nach Anspruch 1,
**dadurch gekennzeichnet, dass**
die zumindest eine selektive Sauerstoffpumpe (18a; 18b) zumindest eine Innenelektrode (20a) aufweist, welche die Anode (16a; 16b) ausbildet.

3. Elektrolysevorrichtung nach einem der vorhergehenden Ansprüche,
**dadurch gekennzeichnet, dass**
die zumindest eine selektive Sauerstoffpumpe (18a; 18b) zumindest einen Feststoffelektrolyten (22a; 22b) aufweist, der zu einem selektiven Transfer von Sauerstoff aus dem Aufnahmebereich (14a; 14b) in einen Pumpraum (24a; 24b) vorgesehen ist

4. Elektrolysevorrichtung nach den Ansprüchen 2 und 3,
**dadurch gekennzeichnet, dass**
die zumindest eine Innenelektrode (20a) direkt auf einer Innenseite des Feststoffelektrolyten (22a; 22b) angeordnet ist.

5. Elektrolysevorrichtung nach Anspruch 1,
**dadurch gekennzeichnet, dass**
der zumindest eine Materialbehälter (28a; 28b) zumindest eine Außenwand (30a; 30b) aufweist, welche zumindest teilweise von der Kathode (12a; 12b) gebildet ist.

6. Elektrolysevorrichtung zumindest nach Anspruch 1,
**gekennzeichnet durch**
zumindest eine Koppeleinheit (36a; 36b), welche zu einer lösbaren Verbindung des Materialbehälters (28a; 28b) mit dem Reaktorgehäuse (26a; 26b) vorgesehen ist.

7. Elektrolysevorrichtung nach einem der vorhergehenden Ansprüche,
**gekennzeichnet durch**
zumindest einen Elektrolytverdränger (42a; 42b), welcher dazu vorgesehen ist, in zumindest einem Betriebszustand zumindest einen Teil des Elektrolyten aus dem Elektrolytreservoir (40a; 40b) in den Reaktorraum (38a; 38b) zu verdrängen.

8. Sauerstofferzeugungssystem mit einer Elektrolysevorrichtung (10a) nach einem der vorhergehenden Ansprüche zur elektrolytischen Produktion von Sauerstoff aus oxidhaltigem Ausgangsmaterial,
**gekennzeichnet durch**
zumindest eine Anreicherungseinheit (44a) zu einer Anreicherung des oxidhaltigem Ausgangsmaterials für die Elektrolysevorrichtung (10a) und zumindest eine Sauerstoffverarbeitungseinheit (46a), welche zu einer Umwandlung des mittels der Elektrolysevorrichtung (10a) erzeugten Sauerstoffs in Wasser vorgesehen ist.

9. Sauerstofferzeugungssystem nach Anspruch 8,
**dadurch gekennzeichnet, dass**
Sauerstoffverarbeitungseinheit (46a) zumindest eine Brennstoffzelle aufweist, welche dazu vorgesehen ist, die chemische Reaktionsenergie aus der Wassererzeugung in elektrische Energie umzuwandeln.

10. Verfahren zum Betrieb einer Elektrolysevorrichtung (10a) nach einem der Ansprüche 1 bis 7, bei dem in einem Löseschritt (48a) das oxidhaltige Ausgangsmaterial zu einem Herauslösen von Sauerstoffionen mit einem Elektrolyt in Kontakt gebracht wird,
**gekennzeichnet durch**
einen Pumpschritt (50a), in welchem die herausgelösten Sauerstoffionen mittels der selektiven Sauerstoffpumpe (18a) aus einem Aufnahmebereich (14a) in einen Pumpraum (24a) gepumpt werden.

11. Verfahren nach Anspruch 10,
**gekennzeichnet durch**
einen Neutralisierungsschritt (52a), in welchem die Sauerstoffionen an einer Innenelektrode (20a) der selektiven Sauerstoffpumpe (18a) neutralisiert werden und Sauerstoffgas erzeugt wird.

## Claims

1. Electrolysis apparatus for the electrolytic production of oxygen from oxide-containing starting material,
with at least one cathode (12a; 12b) which at least partly delimits a receiving region (14a; 14b) and which in at least one operation state is configured for receiving the oxide-containing starting material,
and with at least one anode (16a; 16b),
and with at least one selective oxygen pump (18a; 18b) which is at least partly realized integrally with the anode (16a; 16b),
wherein a reactor housing (26a; 26b) comprises at least one reactor space (38a; 38b) and at least one electrolyte reservoir (40a; 40b), which is connected to the reactor space (38a; 38b) and is configured for receiving an electrolyte,
**characterized by**
at least one material container (28a; 28b) which in at least one operation state is arranged in the reactor housing (26a; 26b) and in at least one operation state is configured for receiving the oxide-containing starting material,
wherein the at least one material container (28a) has at least one bottom plate (32a) comprising at least one electrically insulating alignment element (34a) for an alignment of the at least one selective oxygen pump (18) relative to the cathode (12a).

2. Electrolysis apparatus according to claim 1,
**characterised in that**
the at least one selective oxygen pump (18a; 18b) has at least one interior electrode (20a) which forms the anode (16a; 16b).

3. Electrolysis apparatus according to one of the preceding claims,
**characterised in that**
the the at least one selective oxygen pump (18a; 18b) has at least one solid electrolyte (22a; 22b), which is configured for a selective transfer of oxygen from the receiving region (14a; 14b) into a pump space (24a; 24b).

4. Electrolysis apparatus according to claims 2 and 3,
**characterised in that**
the at least one interior electrode (20a) is arranged directly on an inner side of the solid electrolyte (22a; 22b).

5. Electrolysis apparatus according to claim 1,
**characterised in that**
the at least one material container (28a; 28b) has at least one outer wall (30a; 30b) which is at least partly formed by the cathode (12a; 12b).

6. Electrolysis apparatus at least according to claim 1,
**characterised by**
at least one coupling unit (36a; 36b) which is configured for a releasable connection of the material container (28a; 28b) with the reactor housing (26a; 26b).

7. Electrolysis apparatus according to one of the preceding claims,
**characterised by**
at least one electrolyte displacer (42a; 42b) which is configured in at least one operation state for displacing at least a portion of the electrolyte from the electrolyte reservoir (40a; 40b) into the reactor space (38a; 38b).

8. Oxygen generation system comprising an electrolysis apparatus (10a) as claimed in any of the preceding claims, for the electrolytic production of oxygen from oxide-containing starting material,
**characterised by**
at least one enrichment unit (44a) for an enrichment of the oxide-containing starting material for the electrolysis apparatus (10a) and
at least one oxygen processing unit (46a) which is configured for converting the oxygen produced by means of the electrolysis apparatus (10a) into water.

9. Oxygen generation system according to claim 8,
**characterised in that**
the oxygen processing unit (46a) comprises at least one fuel cell, which is configured for converting the chemical reaction energy from the water production into electric energy.

10. Method for operating an electrolysis apparatus (10a) as claimed in any of claims 1 to 7, in which the oxide-containing starting material is brought into contact with an electrolyte in order to leach out oxygen ions in a leaching step (48a),
**characterised by**
a pumping step (50a), in which the leached-out oxygen ions are pumped from a receiving region (14a) into a pump space (24a) by means of the selective oxygen pump (18a).

11. Method as claimed in claim 10,
**characterised by**
a neutralization step (52a), in which the oxygen ions are neutralized at an interior electrode (20a) of the selective oxygen pump (18a) and oxygen gas is produced.

## Revendications

1. Dispositif d'électrolyse pour la production électrolytique d'oxygène à partir d'un matériau de départ contenant de l'oxide,
avec au moins une cathode (12a ; 12b) délimitant au moins partiellement une zone de logement (14a ; 14b) qui est en au moins un état opératif destinée à recevoir le matériau de départ contenant de l'oxide,
avec au moins une anode (16a ; 16b) et
avec au moins une pompe d'oxygène sélective (18a ; 18b) qui est réalisée au moins en partie intégralement avec l'anode (16a ; 16b),
où un boîtier de réacteur (26a ; 26b) comprend au moins un espace de réacteur (38a ; 38b) et au moins un réservoir d'électrolyte (40a ; 40b) relié avec l'espace de réacteur (38a ; 38b) et destiné à recevoir un électrolyte,
**caractérisé par**
au moins un récipient de matériau (28a ; 28b) qui est en au moins un état opératif disposé dans le boîtier de réacteur (26a ; 26b) et est en au moins un état opératif destiné à recevoir le matériau de départ contenant de l'oxide,
où l'au moins un récipient de matériau (28a) comporte au moins une plaque de fond (32a) qui comprend au moins un élément d'alignement (34a) électriquement isolant pour un alignement de l'au moins une pompe d'oxygène sélective (18a) par rapport à la cathode (12a).

2. Dispositif d'électrolyse selon la revendication 1,
**caractérisé en ce que**
l'au moins une pompe d'oxygène sélective (18a ; 18b) comprend au moins une électrode intérieure (20a) qui forme l'anode (16a ; 16b).

3. Dispositif d'électrolyse selon l'une des revendications précédentes,
**caractérisé en ce que**
l'au moins une pompe d'oxygène sélective (18a ; 18b) comporte au moins un électrolyte solide (22a ; 22b) qui est conçu pour le transfert sélectif d'oxygène de la zone de logement (14a ; 14b) dans un espace de pompe (24a ; 24b).

4. Dispositif d'électrolyse selon les revendications 2 et 3,
**caractérisé en ce que**
l'au moins une électrode intérieure (20a) est disposée directement sur une face intérieure de l'électrolyte solide (22a ; 22b).

5. Dispositif d'électrolyse selon la revendication 1,
**caractérisé en ce que**
l'au moins un récipient de matériau (28a ; 28b) comporte au moins une paroi extérieure (30a ; 30b) formée au moins en partie par la cathode (12a ; 12b).

6. Dispositif d'électrolyse au moins selon la revendication 1,
**caractérisé par**
au moins une unité de couplage (36a ; 36b) conçue pour une liaison séparable du récipient de matériau (28a ; 28b) avec le boîtier de réacteur (26a ; 26b).

7. Dispositif d'électrolyse selon l'une des revendications précédentes,
**caractérisé par**
au moins un moyen déplaceur d'électrolyte (42a ; 42b) destiné en au moins un état opératif à déplacer au moins une partie de l'électrolyte hors du réservoir d'électrolyte (40a ; 40b) dans l'espace de réacteur (38a ; 38b).

8. Système de production d'oxygéné, avec un dispositif d'électrolyse (10a) selon l'une des revendications précédentes, pour la production électrolytique d'oxygène à partir d'un matériau de départ contenant de l'oxide,
**caractérisé par**
au moins une unité d'enrichissement (44a) pour l'enrichissement du matériau de départ contenant de l'oxide pour le dispositif d'électrolyse (10a) et
au moins une unité à traitement d'oxygène (46a) conçue pour la conversion de l'oxygène produit moyennant le dispositif d'électrolyse (10a) en eau.

9. Système de production d'oxygéné selon la revendication 8,
**caractérisé en ce que**
l'unité à traitement d'oxygène (46a) comprend au moins une pile à combustible conçue pour convertir l'énergie de réaction chimique de la production de l'eau en énergie électrique.

10. Procédé de fonctionnement d'un dispositif d'électrolyse selon l'une des revendications 1 à 7, où dans une étape de lixiviation (48a) le matériau de départ contenant de l'oxide est mis en contact avec un électrolyte pour extraire des ions d'oxygène,
**caractérisé par**
une étape de pompage (50a) dans laquelle les ions d'oxygène extraits sont pompés d'une zone de logement (14a) dans un espace de pompe (24a) par la pompe d'oxygène sélective (18a).

11. Procédé selon la revendication 10,
**caractérisé par**
une étape de neutralisation (52a) dans laquelle les ions d'oxygène sont neutralisés à une électrode intérieure (20a) de la pompe d'oxygène sélective (18a) et du gaz d'oxygène est produit.
